# EUROPEAN PATENT APPLICATION

(11) **EP 0 571 022 A1**
(43) Date of publication of application: **24.11.1993**
(21) Application number: 93201364.2
(22) Date of filing: 12.05.1993
(51) Int. Cl.: G01B 9/02, G01J 3/26, G02F 1/21

(54) **Fabry-perot with coated mirrors**

(30) Priority: 19.05.1992 EP 92201408
(71) Applicant: Akzo Nobel N.V., NL-6824 BM Arnhem (NL)
(72) Inventor: Van Wijk, Robert Jan, NL-6824 KC Arnhem (NL)
(74) Representative: Schalkwijk, Pieter Cornelis

(57) **Abstract**

In a Fabry-Perot etalon or interferometer the metal mirrors are each provided with a dielectric coating on the side facing away from the enclosed gap. The dielectric coating, which may be seen as an analogue of anti-reflection coatings such as commonly applied to the elements of optical instruments, leads to the advantage of peak transmittance being improved without the finesse being adversely affected. The dielectric coating is transparent for the wavelength (λ) used and preferably has a thickness of about ¼λ/n, n being the refractive index of the dielectric coating material. The coating preferably is of a material having a high index of refraction, examples thereof including zirconium dioxide, titanium dioxide, zinc sulfide, or zinc selenide.

## Description

The invention pertains to Fabry-Perot etalons and interferometers, hereinafter referred to as Fabry-Perots for short.

Fabry-Perots are well-known and important optical devices. They may be used as a true interferometer, (e.g., for spectroscopy), as a laser cavity or, more particularly, as an insert in the laser cavity of a single mode laser. Currently, Fabry-Perots are also being suggested as reflection or transmission modulators for optical interconnects.

A Fabry-Perot commonly comprises two reflective surfaces (the mirrors) separated by a determined optical path length (the gap). In a Fabry-Perot interferometer the gap enclosed by the mirrors usually comprises air and can be mechanically varied, e.g. by moving one of the mirrors. In a Fabry-Perot etalon the mirrors are usually held fixed, for example by means of a spacer, for which, e.g., quartz, or glass is commonly used. Common gap widths for an interferometer vary from several millimeters to several centimeters. Considerably greater gap widths are customary when the Fabry-Perot is employed as a laser resonant cavity. For some applications, including modulators, gap widths may be of the order of one to several micrometers.

In general, two types of mirrors are used in Fabry-Perots, viz. so-called quarter-wave stacks (QWS) of a material that would not exhibit substantial reflectance as a single layer, or mirrors comprising a single layer of a material that is in itself reflecting, usually comprising metal or metal compounds. The mirrors frequently are plane parallel, but curved-mirror systems are known as well, notably as laser cavities and as spectrum analyzers.

The invention pertains to Fabry-Perots of the type comprising two mirrors of a reflecting material such as metal. As is apparent from the above, the inner surfaces of the mirrors are separated from each other to form the gap, the gap width optionally being fixed.

GB 2 082 380 discloses a Fabry-Perot etalon of this type used in a semiconductor injection laser. The Fabry-Perot is provided with a quarter-wavelength anti-reflection layer on the inner surface of one of the mirrors in order to broaden the spectral emission, increase the range of single mode operation, and reduce spread on the far-field pattern. The inner surface of the other mirror is optionally coated with a half-wavelength layer.

In Annales de Physique 6 (1951) pages 5 ff. Fabry-Perots are disclosed, the metal mirrors of which are provided with a dielectric layer on the side facing the gap. In the disclosure it is concluded that a single dielectric layer is unsuitable to significantly improve the reflectance of a Fabry-Perot.

EP 371 695 pertains to a spatial light modulator on the basis of a QWS Fabry-Perot in which the gap comprises a liquid crystal layer and which includes metal electrodes. The mirrors in this device are dielectric multilayer films, i.e. quarter wave stacks.

QWS Fabry-Perots have also been disclosed in, int.al., Thin Solid Films Vol.137, no.2, pages 161-168 (1968), and Optik, Vol.50, no.4, pages 329-340 (1978).

The state of the art further includes a common knowledge of Fabry-Perots. The original interferometer developed by C. Fabry and A. Perot, for instance, comprises two transparent (glass or quartz) plates with plane surfaces. The inner surfaces are coated with partially transparent films of high reflectivity and are parallel, enclosing an air gap. The transparent plates serve as a substrate for the reflecting coating; These and other known Fabry-Perot mirrors commonly comprise a metal such as gold, silver or aluminium, or a metal compound as a reflecting surface.

Naturally the mirrors of a Fabry-Perot exhibit substantial reflectance, e.g. higher than 90%, but to a certain extent they also show transmittance. Further, mirrors comprised of a material that is in itself reflecting, notably metal mirrors, display absorption of incident light.
The mirror reflectivity being high, the reflectance and transmittance show a series of peaks as a function of the wavelength of the incident light. If the mirror separation is much larger than the wavelength (which is usually the case) the peaks are approximately periodical in the wavelength. The ratio of the distance separating subsequent peaks (the free spectral range, or FSR) to the full-width at half maximum of the peaks is frequently used to specify the quality of a Fabry-Perot. Said ratio is a dimensionless quantity called the "finesse". For many applications a high finesse is desirable.
In order to achieve a high finesse, a high reflectance is generally required. In the case of Fabry-Perots of the type having mirrors comprising metal or metal compounds, increased reflectance usually is attended with increased absorbance. Consequently, in Fabry-Perots of the present type the demand of high finesse competes with that of high peak transmittance. It is desired to improve Fabry-Perots with respect to peak transmittance, without the finesse being adversely affected.

It is an object of the present invention to provide a Fabry-Perot of the aforementioned type containing mirrors of material that is in itself reflecting, such as metal or metal compounds, which exhibits improved transmittance while retaining a high finesse. It is a further object of the invention to provide a Fabry-Perot of the type in which the mirrors are of a material that in itself is reflecting, such as metal, which allows improved finesse while retaining good transmittance. Still another object of the invention is to provide a metal mirrors-containing Fabry-Perot that simultaneously displays improved transmittance and a higher finesse.

The invention consists in that in a Fabry-Perot of the type described above the mirrors are each provided with a dielectric coating on the side facing away from the gap.

The dielectric coating may be seen as an analogue of an antireflection coating such as is commonly applied to the elements of optical instruments, but has a quite different function. In this respect it should be clearly recognised that the use of such an anti-reflection coating on the outer surface of the mirrors leads to the desired advantages, whilst the working area of the Fabry-Perot (to which the advantages apply) is within the gap, i.e. on the inside of the mirrors.

Here follows a description of various embodiments of the invention.

The dielectric coating should be substantially transparent for the wavelength used. The Fabry-Perots according to the invention hereinafter described are suitable for use with light of a fictive wavelength λ. In practice, this light may indeed be of a single wavelength but may also be polychromatic. In the latter case λ indicates the average wavelength.

The dielectric coating will generally function well if it has a thickness of from about 0.1λ/n to about 0.5λ/n, n indicating the index of refraction of the dielectric material. Preferably, the dielectric coating has a thickness of about ¼λ/n. These thicknesses are to be inderstood as comprising said range + one or more half wavelengths, as the effect attained is periodical, the period being ½λ.

It should be noted that such Fabry-Perots according to the invention are clearly distinguished from Fabry-Perots having quarter-wave stacks as mirrors. As indicated above, the present invention pertains to Fabry-Perots having mirrors comprising a reflecting material, i.e. a material that is in itself reflecting, such as a metal or a metal compound. The aforementioned problem that high peak-transmittance and high finesse are competing demands is due to the absorbance observed with mirrors comprising such a reflecting material, and at any rate plays a less significant role in Fabry-Perots having quarter-wave stacks as mirrors. Such Fabry-Perots are outside the scope of the present invention and, besides, are more difficult to produce, as the manufacture process involves the deposition of a number of quarter-wave layers of two different refractive indices.

In the embodiment in which a Fabry-Perot according to the original construction of C. Fabry and A. Perot is used, i.e. one having mirrors comprising a transparent substrate plate coated on the inside, i.e. the side facing the gap, with reflecting material, the dielectric coating of the invention is applied between the reflecting material and the substrate.

Suitable dielectric coatings include any inorganic, organic or polymeric materials which satisfy the main requirement of being, for the wavelength used, a non-absorbing layer with an index of refraction higher than the gap medium (air or glass, usually). Examples of inorganic materials are the well-known materials commonly employed in anti-reflection coatings, such as cryolite (a sodium aluminium fluoride compound), magnesium fluoride, cerium fluoride, or a mixture thereof. Examples of polymeric materials are, e.g., those used for optical lenses, such as diethylene glycol bis(allyl carbonate).

It has been found that the higher the refractive index of the dielectric coating, the better the Fabry-Perot according to the instant invention functions. Hence, preferred dielectric coatings are those having a refractive index higher than 2.0. These materials are in fact known from the field of Fabry-Perots. They commonly constitute the high refractive index layers in the afore-mentioned quarter wave stacks. Preferred dielectric coatings in this respect comprise zirconium dioxide, titanium dioxide, zinc sulfide, zinc selenide, or a mixture thereof.

It should be noted that, generally, it will be convenient to apply the same dielectric coating to the surfaces of both mirrors. However, each mirror may also be coated with a different dielectric coating.

The mere coating of the mirrors with dielectric layers, under the conditions set forth above, suffices to enhance the peak-transmittance. For various applications a further enhancement is not necessary, or sometimes even undesirable. However, if an optimum enhancement in peak-transmittance with retained finesse is desired it is required that the thickness of the mirrors is adapted to the presence of the dielectric coating in such manner that the reflectance inside the gap remains unchanged. It cannot be predicted in general terms whether, in a specific case, the desired adaption can be achieved by inreasing or by decreasing the thickness. However, the person of ordinary skill in the art may calculate this, using the theory of Abelès described in M. Born and E. Wolf, "Principles of Optics", Pergamon Press, Oxford, 4^{th} edition, 1970, pages 51 ff. and 611 ff.

The further constituents of the Fabry-Perots according to the instant invention are customary. So, the gap may enclose air, glass, quartz, or any other suitable material, such as a transparent organic polymer. If the Fabry-Perot is to be used as a transmission modulator for optical interconnects, the gap may comprise a non-linear optical (NLO) material, preferably an NLO polymer. NLO materials are well-known in the art and need no further elucidation here. Examples of suitable NLO polymers are those described in EP 350 112, EP 350 113, EP 358 476, EP 445 864, EP 378 185, and EP 359 648.

The mirrors may be of any suitable reflecting material, and are in themselves well-known. Common examples of such materials include metals, more particularly gold, silver, or aluminium.

The invention will be further described hereinafter with reference to the following Examples. The Examples should be construed to be explanatory rather than limitative.

### COMPARATIVE EXAMPLE

The Fabry-Perot of comparison is an etalon for use with a wavelength of about 514,5 nm comprising two plane parallel mirrors of silver enclosing a 1 mm gap which comprises glass having a refractive index of 1.55. The thickness of the mirrors is 50 nm. No dielectric coating is present.

For a wavelength near 514,5 nm the Fabry-Perot etalon displays a peak transmittance of 3,7% at a finesse of 20.

### EXAMPLE 1

The exemplified Fabry-Perot is an etalon as above, with the mirrors being coated on the outer surfaces (i.e. the surfaces pointing away from the gap) with a dielectric coating of zinc sulfide. The thickness of the dielectric coating is 55,9 nm, its refractive index is 2.3, i.e. the Fabry-Perot etalon, in accordance with the invention, comprises a dielectric coating of ¼λ/n.

For a wavelength near 514,5 nm the Fabry-Perot etalon displayed a peak transmittance of 9.7%, at a finesse of 21.

### EXAMPLE 2

The Fabry-Perot exemplified here is an etalon as in Example 1, with the thickness of the mirrors being adjusted to 47.8 nm, in order to have the same internal reflectance as the uncoated Fabry-Perot etalon of comparison.

For a wavelength near 514,5 nm the Fabry-Perot etalon displayed a peak transmittance of 12,5% at a finesse of 20.

## Claims

1. A Fabry-Perot comprising two mirrors of a reflecting material such as metal, the mirrors being separated from each other to form a gap, the gap-width optionally being fixed, characterized in that the mirrors are each provided with a dielectric coating on the side facing away from the gap.

2. A Fabry-Perot according to claim 1 suitable for use with light of a single or average wavelength λ, characterized in that the dielectric coating has a refractive index n, and has a thickness of from about 0.1λn to about 0.5λ/n.

3. A Fabry-Perot according to claim 2, characterized in that the dielectric coating has a thickness of about ¼λ/n.

4. A Fabry-Perot according to any one of the preceding claims, characterized in that the thickness of the mirrors is adjusted so as to retain the same level of internal reflectance as an uncoated Fabry-Perot.

5. A Fabry-Perot according to any one of the preceding claims, characterized in that the dielectric coating comprises an organic polymer, such as diethylene glycol bis(allyl carbonate).

6. A Fabry-Perot according to any one of the claims 1-4, characterized in that the dielectric coating comprises cryolite, magnesium fluoride, cerium fluoride, or a mixture thereof.

7. A Fabry-Perot according to any one of the claims 1-4, characterized in that the dielectric coating has a refractive index higher than 2.0.

8. A Fabry-Perot according to claim 7, characterized in that the dielectric coating comprises zirconium dioxide, titanium dioxide, zinc sulfide, zinc selenide, or a mixture thereof.

9. A Fabry-Perot according to any one of the preceding claims, characterized in that the gap comprises a non-linear optical polymer.

10. The use of a Fabry-Perot according to any one of the preceding claims as an interferometer.

11. The use of a Fabry-Perot according to any one of the preceding claims as a laser-cavity.

12. The use of a Fabry-Perot according to any one of the preceding claims as a reflection or transmission modulator.
